# EUROPEAN PATENT SPECIFICATION

(11) **EP 3 857 181 B1**
(45) Date of publication and mention of the grant of the patent: **25.10.2023**
(21) Application number: 19778614.8
(22) Date of filing: 23.09.2019
(51) Int. Cl.: F03B 13/00, G01F 15/18

(54) **A WATER FITTING**
WASSERARMATUR
RACCORD D'EAU

(30) Priority: 28.09.2018 GB 201815838
(43) Date of publication of application: 04.08.2021
(73) Proprietor: Steve Leigh & Associates Limited, Stuston Nr Diss, Suffolk IP21 4AB (GB)
(72) Inventor: LEIGH, Steve, Stuston Nr Diss Suffolk IP21 4AB (GB); LIVINGSTONE, Amelia, Cambridge Cambridgeshire CB23 2RF (GB); BAKER, James, Cambridge Cambridgeshire CB23 2RF (GB); NAYLOR, Stuart, Cambridge Cambridgeshire CB23 2RF (GB); COHEN, Philip, Cambridge Cambridgeshire CB23 2RF (GB)
(74) Representative: Forresters IP LLP
(86) International application number: PCT/GB2019/052656
(87) International publication number: WO 2020/065275

(56) References cited:
- US-A- 4 936 508
- US-A1- 2014 076 415
- US-A1- 2016 226 340

## Description

The present invention relates to a water fitting housing and a smart meter including the water fitting housing.

Reference is made to UK patent No. GB2440412 which teaches an innovative water fitting.

A simplified typical mains water supply network comprises a primary supply pipe which is connected to a water supply and which feeds a number of secondary supply pipes which are each arranged so as to supply water to individual residential or commercial buildings. In some cases the secondary supply pipes provide water to groups of residential or commercial buildings. In other cases, the secondary supply pipes provide water to industrial buildings (ie. buildings in which industrial activities take place).

In order to allow the water supplier to meter the amount of water consumed by each user, and hence charge the user for their water usage, water meters are often installed between the secondary supply pipes and the building being supplied with water. The water meters are attached to water meter manifolds and are usually located either in insulated chambers attached to an external surface of a particular building or are located underground (for example, buried in the pavement outside the building).

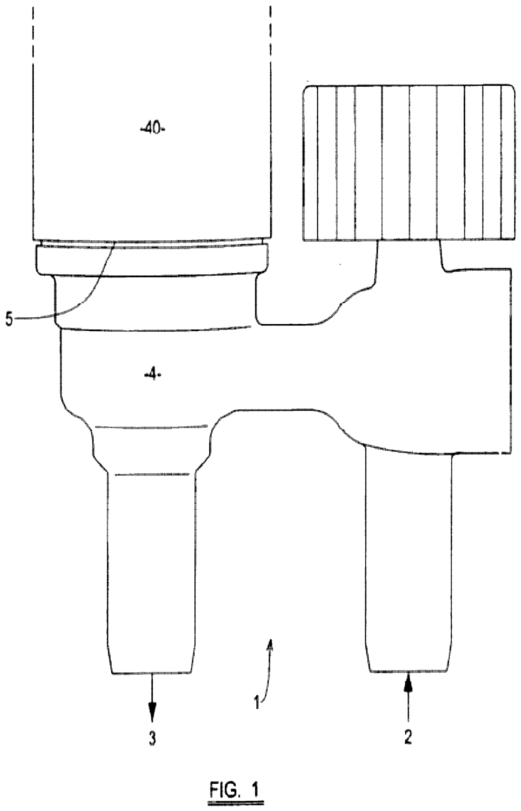

A typical water meter manifold 1 (see figure 1) comprises a water input pipe 2 which is connected to the secondary supply pipe of the mains water supply network and water output pipe 3 which is connected to an input supply pipe for the building. Between the input 2 and output 3 pipes of the water meter manifold 1 is a water meter 40 (which is operable to monitor the flow of water between the input 2 and output 3 of the manifold 1) and a non-return valve 41 (which is designed to prevent water flowing from the output 3 of the manifold 1 to the mains water supply through the input 2 of the manifold 1).

The water meter 40 is attached to the water meter manifold 1 by means of respective cooperating attachment members which may comprise cooperating threaded attachment surfaces on the manifold 1 and the water meter 40. This attachment method allows engineers to access the meter 40 in order to replace or repair meters 40 that are either damaged or have become obsolete.

Although the position of the non-return valve 41 in the water meter manifold 1 is generally inconsequential, in some examples the valve 41 is located in the output of the water meter manifold (in other words the downstream from the water meter itself) - "downstream" and "upstream" are commonly used terms and describe locations with respect to the normal direction of flow of water.

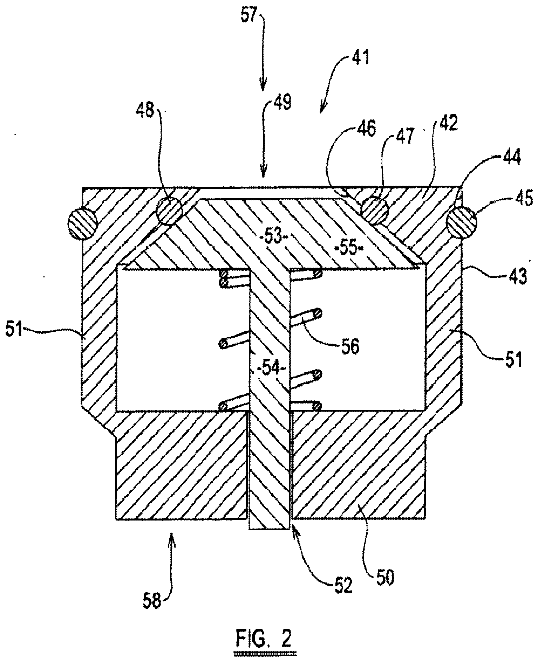

The non-return valve 41 in a water meter manifold 1 may be a modular component which is located in an integrally formed housing in the manifold 1. A typical non-return valve (see figure 2) comprises an annular ring 42 suitable to allow the non-return valve 41 to be fixedly secured to the housing of the manifold 1. An external surface 43 of the non-return valve 41 includes a groove 44 in which a first washer 45 is partially located; thus, the first washer 45 ensures a substantially water tight seal with the housing of the valve. An internal surface 46 of the annular ring 42 of the valve 41 includes a groove 47 in which a second washer 48 is partially located. The internal surface 46 of the annular ring 42 defines a void 49 through the ring 42 and the second washer 48 defines a valve seat of the non-return valve 41.

The annular ring 42 of the valve 41 is connected to a cylindrical base portion 50 of the non-return valve 41 by a number of supporting arms 51. The cylindrical base portion 50 includes a central hole 52 which extends to the entire depth of the base portion 50 and is generally aligned with and parallel to the hole 49 of the annular ring 42. A mushroom-shaped valve member 53 is located between the cylindrical base portion 50 and the annular ring 42 of the valve 41. The mushroom-shaped valve member 53 includes a rod 54 which extends through the central hole 52 of the cylindrical base portion 50 of the valve 41 and a head 55 which is resiliently held against the valve seat 47 by a helical spring 56 (which acts against the mushroom-shaped valve member 53 and the cylindrical base portion 50 of the non-return valve 41).

Thus, when water flows towards the valve 41 from a first direction 57 the mushroom-shaped valve member 53 is forced from a position abutting the valve seat 47 towards the cylindrical base portion 50 (compressing the helical spring 56) and allows the water to flow through the valve 41 between the supporting arms 51 which hold the cylindrical base portion 50 to the annular ring 42 of the valve 41. However, if water is to flow towards the valve 41 from the opposing direction 58 then the mushroom-shaped valve member 53 is pressed against the valve seat 47 substantially forming a water tight seal which prevents the water from flowing through the valve 41.

When a non-return valve 41 of the above described type is placed in a housing which is in the output of a water manifold 1 which is connected to a mains water supply network and a building, then water is generally prevented from flowing from the building back into the mains water supply.

Non-return valves 41 of this type are utilised in order to ensure that contaminated water from, for example, within a building is not returned to the mains water supply and supplied to another buildings or users.

GB2440412 teaches an innovative fitting which allows the level of non-return protection to be improved in relation to such manifolds 1 by providing a housing for a non-return valve 41.

Smart meters have been introduced in relation to some utilities, such as electricity. A smart meter may be configured to transmit substantially real-time information about consumption of the utility. This information may be transmitted to one or more remote devices wirelessly, for example. The or each remote device may include one or more consumer devices as well as one or more utility provider devices. In some implementations the information is transmitted, at least in part, through the Internet.

There is a desire to provide smart meters in relation to the water supply utility. Water meters 40 are conventionally, however, attached to manifolds 1 as described above. There is often no electrical power provided in relation to such conventional water meters. Therefore, the electrical power for the operation of a water smart meter may be provided by a battery.

A battery, however, needs replacing once discharged. This increases maintenance costs, causes unavailability of the smart meter information (whilst a replacement is awaited), increases the cost and size of the meter (to accommodate a sufficiently large battery), and reduces the functionality of the meter (as advanced functions and data transmission must be limited to reduce power consumption).

US2014076415 provides a fluid flow control system for a shower having a fluid inlet configured to be operatively coupled to a fluid source, a fluid outlet in fluid communication with the fluid inlet such that fluid may exit the system therethrough, a proximity sensor for detecting the position of an object within a region adjacent the sensor, and a flow control device configured to regulate fluid flow between the inlet and outlet in response to object detection by the sensor, wherein the flow control device varies the fluid flow proportional to the detected distance of an object from the sensor. In some versions, power for the electrical components of the fluid flow control system is generated by the water flowing through the system, with the generated power stored in a rechargeable battery within the fluid flow control system, for example.

The present invention seeks to alleviate the above problems associated with the prior art.

Accordingly, an aspect provides a water fitting housing comprising: a main body section having first and second ends and a first channel connecting the first and second ends, wherein the main body section includes a wall and an inner tube, wherein the main body section defines a first flow path between an inner surface of the wall and the inner tube, and a second flow path inside the inner tube; a first attachment arrangement located towards a first end of the main body section; and a second attachment arrangement located towards a second end of the main body section, and wherein the first attachment arrangement is suitable to be attached to an attachment member which is substantially identical to the second attachment arrangementwherein the first attachment arrangement is suitable for connection to a water meter manifold and the second attachment arrangement is suitable for connection to a water meter, such that water drawn through an external cavity of a coaxial pipe section of the water meter manifold will flow through the first flow path of the housing, and water which has passed through the water meter and through an internal cavity of a coaxial pipe section of the water meter will flow through the second flow path of the housing and into an internal cavity of the coaxial pipe section of the water meter manifold, characterised by: a rotor member located at least partially within the main body section of the housing and including at least one magnetic element configured to be driven by a flow of fluid through the housing; and a stator member located with respect to the rotor member such that rotation of the or each magnetic element induces an electrical current in the stator member to generate electrical power.

A described arrangement provides a water fitting housing comprising: a main body section having first and second ends and a first channel connecting the first and second ends; a first attachment arrangement located towards a first end of the main body section; a second attachment arrangement located towards a second end of the main body section; a rotor member located at least partially within the main body section of the housing and including at least one magnetic element configured to be driven by a flow of fluid through the housing; and a stator member located with respect to the rotor member such that rotation of the or each magnetic element induces an electrical current in the stator member to generate electrical power, wherein the first attachment arrangement is suitable to be attached to an attachment member which is substantially identical to the second attachment arrangement.

The housing may be suitable for use in a water supply network.

The housing may further include an inner valve supporting section configured to receive a non-return valve.

The housing may further include the non-return valve.

The housing may be constructed out of plastic.

The attachment arrangements may comprise threaded surfaces.

The rotor member may include an annular ring, the annular ring including a plate inclined with respect to a cross-sectional plane of the annular ring.

The plate may include the at least one magnetic element.

The stator member may include a stator extension, configured to extend into the first flow path between the wall and the inner tube of the main body.

Another aspect provides a meter and a housing, wherein the generated electrical power provides electrical power for one or more operations of the meter.

By way of example, the present invention will be described with reference to the accompanying figures, in which:
Figure 1 shows a water meter manifold;
Figure 2 shows a non-return valve in the form of a check valve;
Figure 3 shows an external view of an embodiment of the present invention;
Figure 4 shows a view through an embodiment of the present invention;
Figure 5 shows an external view of an embodiment of the present;
Figure 6 shows another external view of an embodiment of the invention;
Figure 7 shows a perspective view through an embodiment of the present invention;
Figure 8 shows a cross-section of an embodiment without a rotor fitted;
Figure 9 shows a cross-section of an embodiment with a rotor and coil schematically depicted;
Figure 10 shows a cross-section of another embodiment with a rotor and coil schematically depicted;
Figure 11 shows a system according to some embodiments;
Figure 12 shows an example rotor member;
Figure 13 shows an example rotor member;
Figure 14 shows a winding core of an example stator member;
Figure 15 shows an exploded view of example housing portions and winding core;
Figure 16 shows another exploded view of the example housing portions and winding core of Figure 15;
Figure 17 shows a cross-section of example housing portions and an example winding core;
Figure 18 shows an exploded view of the example housing portions and winding core of

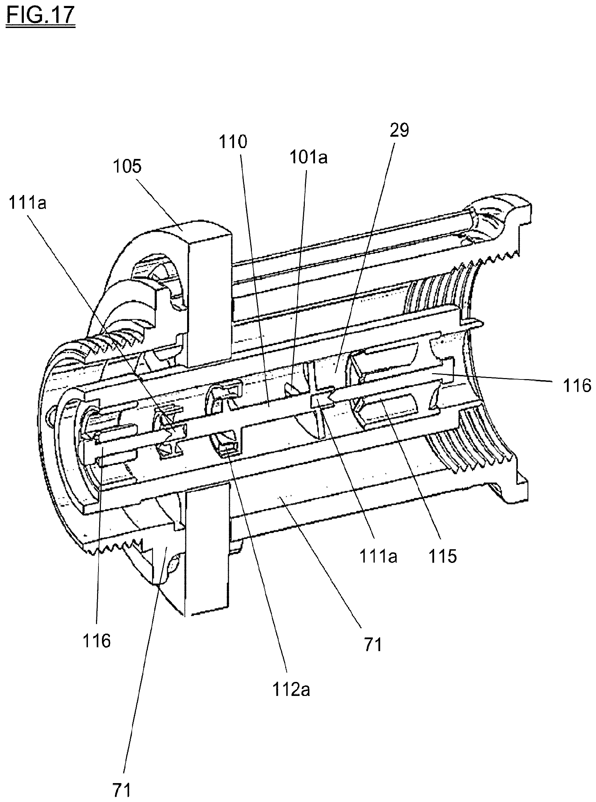

Figure 17; and

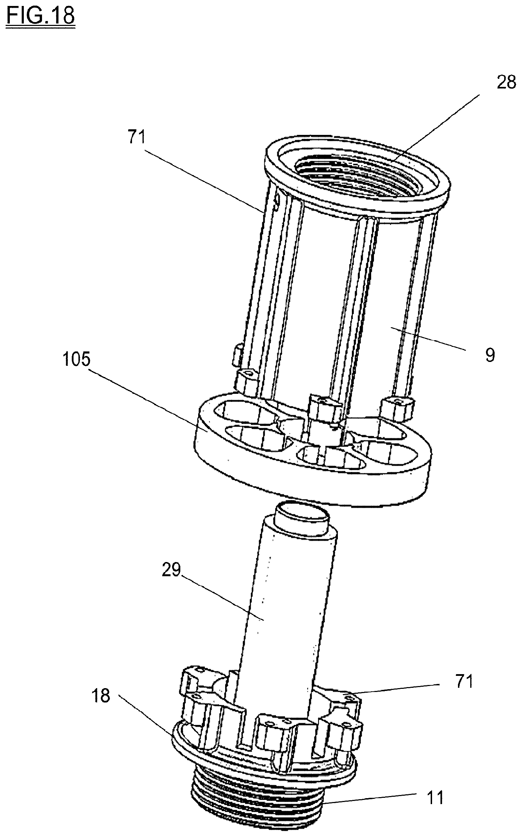

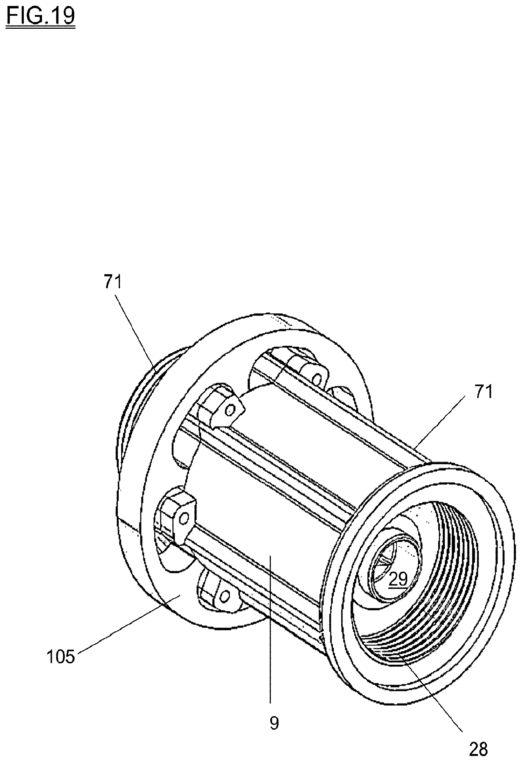

Figure 19 shows an assembled view of the example housing portions and winding core of Figures 17 and 18.

In a typical water meter manifold 1, water is supplied through a manifold input 2 and fed into a water meter 40 before the water passes through the manifold output 3. In the manifold 1, water is passed into an outer cavity (not shown) of a generally vertical coaxial pipe section 4. The water travels through the outer cavity to a water meter 40 which is located at the top of the generally vertical coaxial pipe section 4. After flowing through the meter 40 the water passes though a central cavity (not shown) of the generally vertical coaxial pipe section 4 towards the output 3 of the manifold 1 which is located below the water meter 40. Along the central cavity of the coaxial pipe section 4 is a non-return valve (not shown) of the type described above. The non-return valve is designed to prevent water from flowing from the output 3 of the manifold 1 back to the input 2 of the manifold 1 and, hence, potentially contaminating the water supply (which may be a mains water supply).

Thus, it will be appreciated that water is drawn through the water meter manifold 1 and through the water meter 40 during normal operation. The water meter 40 includes a flow meter (not shown) which allows the water meter to determine the quantity of water flowing through the manifold 1. The meter may display the quantity of water on a dial or electronic display on an upper surface thereof and/or may transmit the quantity by means of an electromagnetic signal. The operator of the water supply network can, therefore, monitor and record the quantity of water flowing through the manifold 1 and charge users appropriately for the water.

The generally vertical coaxial pipe section 4 of the manifold 1 includes a meter attachment arrangement 5 at the upper end thereof which is suitable to mate with a corresponding manifold attachment arrangement at a lower end of the water meter 40. Rubber washers 6 (or washers made out of synthetic substitutes thereof) may be used in the attachment arrangements 5 to minimise the amount of water which may leak through the mated attachment arrangements 5.

Typically the meter attachment arrangement 5 of the manifold 1 comprises a threaded section on an inner surface of the wall of the outer cavity of the coaxial pipe section 4 of the manifold 1 at the upper end thereof. The manifold attachment arrangement of the meter typically comprises a corresponding threaded section on an outer wall of an outer cavity of a coaxial part of the manifold attachment arrangement of the meter.

The meter 40 and manifold attachment arrangements include respective inner cavity mateable sections (not shown) - in other words, respective male and female mateable sections. Thus, when the meter 40 and the manifold 1 are attached to each other water may pass up through the outer cavity of the coaxial pipe section 4 of the manifold 1 into an outer cavity of the manifold attachment arrangement of the meter 40, through the meter 40 and, subsequently, through an inner cavity of the manifold attachment arrangement 5 of the meter 40 into the inner cavity of the coaxial pipe section 4 of the manifold 1.

Usually the inner cavity mateable sections (ie. male and female mateable sections) comprise respective surfaces which abut each other.

The coaxial pipe section 4 and the meter 40 and manifold attachment arrangements all have a generally circular cross-section.

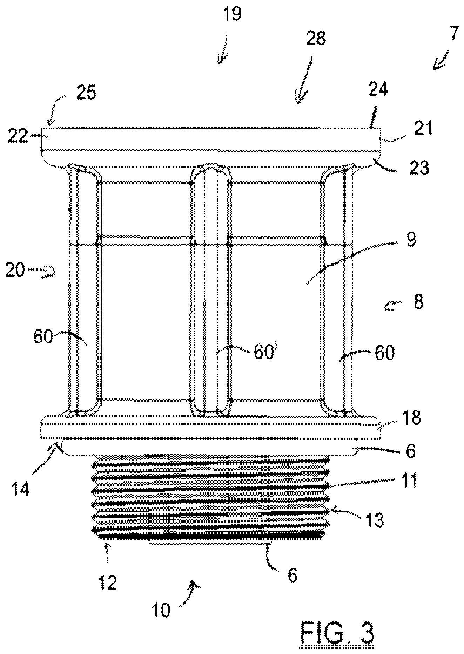

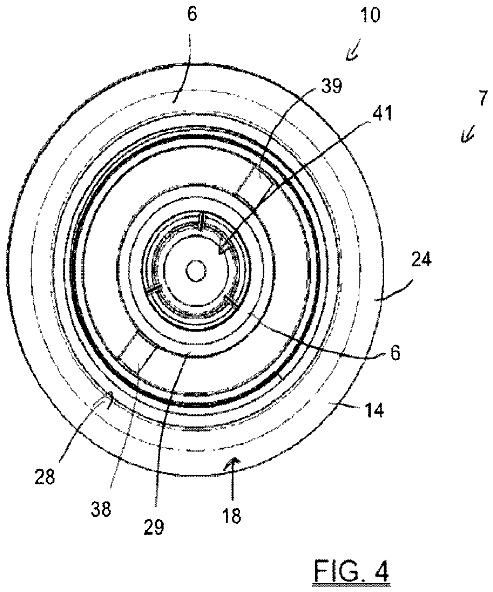

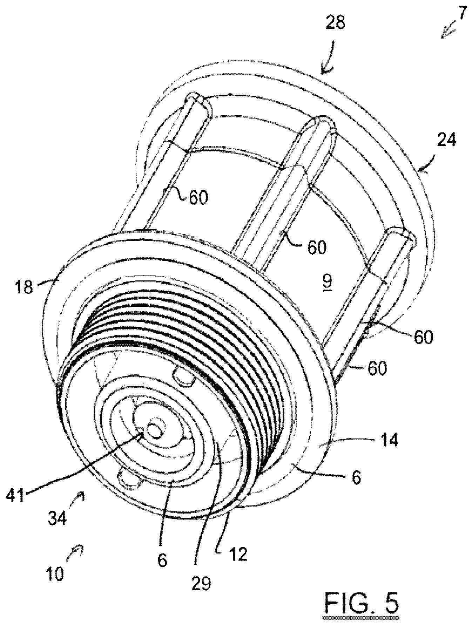

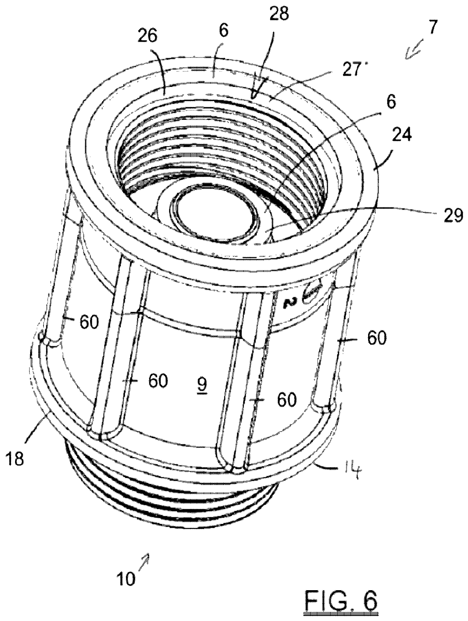

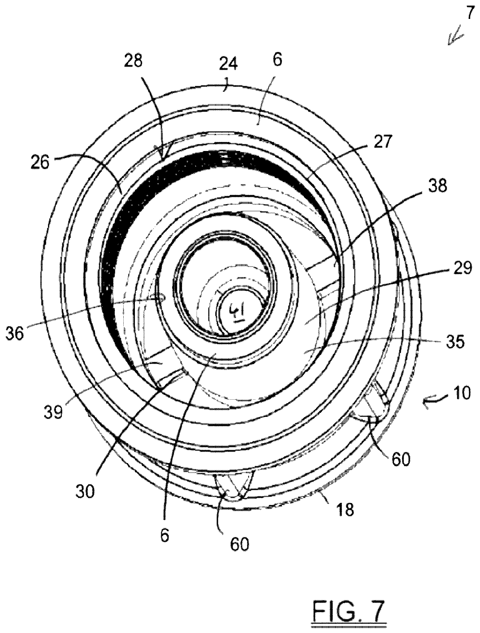

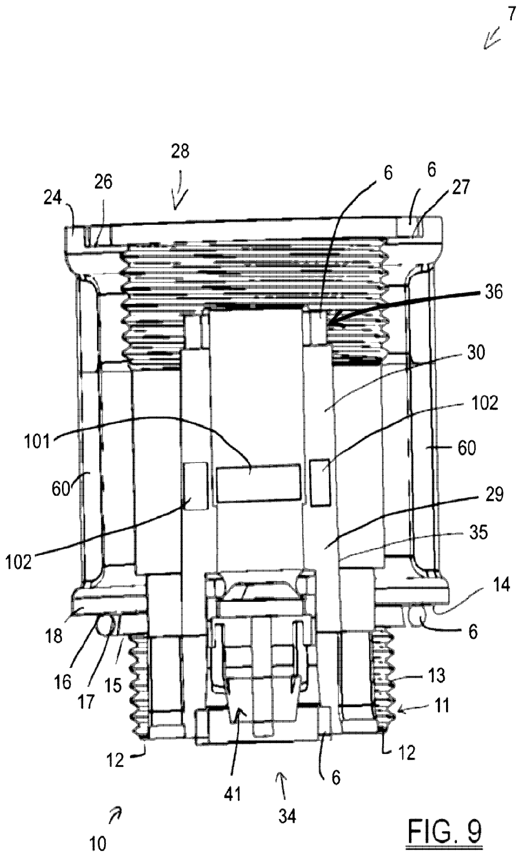

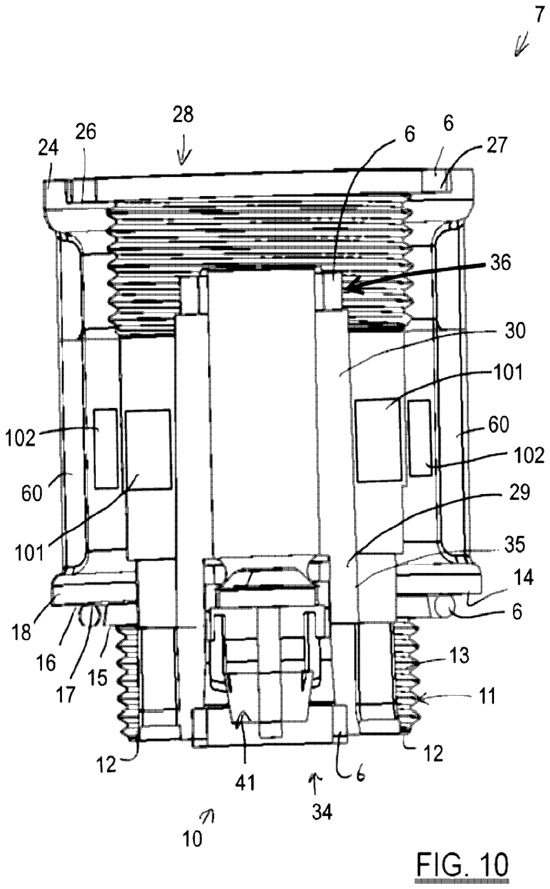

Some embodiments may include a generator housing 7 (which is similar in form to the non-return valve housing of GB2440412), as shown in figures 3-10. The generator housing 7 may comprise a generally pipe-like (or tubular) main body section 8 having an outer wall 9, generally circular internal and external cross-sections, and a length (defined along a longitudinal axis of the housing) - for example more than 45.5mm (e.g. about 60mm or less (such as 57mm) not including the a manifold attachment member (or arrangement) 11).

A first end 10 of the main body section 8 of the housing 7 may comprise the manifold attachment member (or arrangement) 11. The manifold attachment member 11 may have a wall with inner and outer surfaces (with respective inner and outer diameters - which may be about 40.8mm for the inner diameter) and an end surface 12. The outer surface of the manifold attachment member 11 may be threaded and/or the inner surface may be generally smooth. The thread 13 on the outer surface, if provided, may extend along a first portion of the length of the housing 7 which may be less than half of the total length of the housing 7 and may be about 15.43mm. The end surface 12 of the wall of the manifold attachment member 11, if provided, may be generally circular in shape and may extend between the inner and outer surfaces of the wall of the manifold attachment member 11 at an end thereof.

At the end of the manifold attachment member 11 which opposes the end surface 12 thereof across the first portion of the length of the housing 7 may be a stop section 14 of the outer wall 9 of the housing 7 which may have a larger external diameter than the outer diameter of the manifold attachment member 11 - for example, about 51.6mm - (an inner diameter of this section 14 may be the same as that of the manifold attachment member 11). This section 14 of the housing 7 may extend along a second portion of the length of the housing 7 (which may be less than the first portion of the length of the housing 7 and may be about 2.57mm) and may define a stop surface 15 for the manifold attachment arrangement 11 of the housing 7 which may be generally parallel to the end surface 12 of the manifold attachment arrangement 11. Thus, the stop section 14 of the housing 7 may comprise a ridge around the circumference of the main body section 8.

An abutment section 16 of the outer wall 9 of the housing 7 may extend through a third portion of the length thereof, for example, from the stop section 14 away from the first end 10 of the main body section 8 of the housing 7. The abutment section 16 may have an external diameter which is larger than that of the external diameter of the stop section 14 - for example, about 58.7mm (an inner diameter may be the same as that of the manifold attachment member 11 and/or stop section 14). The third portion of the housing length may be less than the first or second portions of the housing lengths and may be about 0.5mm. The abutment section 16 may define an abutment surface 17 for the manifold attachment arrangement 11 which may be generally parallel to the stop surface 15.

A first guard section 18 may extend over a fourth portion of the length of the housing 7, for example, from the abutment section 16 away from the first end 10 of the main body section 8 housing 7 towards a second end 19 of the main body section 8. The first guard section 18 may have an external diameter which is larger than that of the abutment section 16 - for example, about 68mm - (an inner diameter which may be the same as that of the manifold attachment member 11, stop section 14 and/or abutment section 16). The fourth portion of the housing length may be less than the first potion of the length but greater than the third portion of the length of the housing 7.

A ribbed gripping section 20 may extend though a fifth portion of the length, for example, from the first guard section 18 to a second guard section 21. The ribbed gripping section 20 may include one or more vertical ribs 60 - for example, six ribs - which may be evenly distributed around the housing 7 and/or may extend through substantially the entire fifth portion of the length of the housing 7. The external diameter of the ribbed gripping section 20, between the ribs 60, may be less than the external diameter of the first guard section 18. The external diameter of the ribbed gripping section 20 at the ribs 60 (assuming two ribs 60 oppose each other across the diameter of the housing 7) may be larger than that between the ribs 60 and/or may be less than, substantially equal to, or greater than the external diameter of the first guard section 18. Each rib may have rounded edges.

Compared to the water fitting described in GB2440412, the fifth portion of the length may be greater in some embodiments. In some embodiments, the length of the fifth portion may be such that there is sufficient space to accommodate at least part of an electrical power generator.

The second guard section 21 may comprise a lip 22, and a main portion of which may extend away from the housing 7, e.g. generally perpendicular to the longitudinal axis of the housing 7. The lip 22 may include a meter abutment section 24 (or secondary portion) which may extend from the main portion 21 away from the first end 10 of the housing 7 (for example, for about 3.07mm) and may be generally parallel with the longitudinal axis of the housing 7. The meter abutment section 24 may include a meter abutment surface 25 which may be a generally flat circular surface in parallel with the end surface 12 of the manifold attachment arrangement 11 (and may has an inner diameter of about 60.99mm and/or an outer diameter of about 68mm). The second guard section 21 may extend through a sixth portion of the length of the housing 7. Cumulatively the first to six portions of the length of the housing 7 may be equal to the distance between the end surface 12 of the manifold attachment arrangement 11 and the meter abutment surface 24 (ie. the sum of the first to sixth lengths is equal to the length of the housing 7).

A meter stop section 26 may extend in a plane substantially perpendicular to the longitudinal axis of the housing 7, for example, from an inner surface 27 of the meter abutment section 24 to a meter attachment arrangement 28.

The meter attachment arrangement 28 may comprise a threaded wall which may extend through a length of the inner surface of the outer wall 9 of main body section 8 of the housing 7 generally from the second end 19 of the housing 7 towards a first end 10 of the housing 7. The threaded surface may be such that the inner surface of the outer wall of the housing 7 of the ribbed gripping section 20 and the second guard section 21 may be substantially threaded. The internal diameter of the housing 7 in this threaded section may be greater than that of at the manifold attachment arrangement 11.

An inner valve supporting section (or element) 29 of the housing 7 may comprise a tubular main body 30 with a length - which may be about 33.08mm - which may be less than the total housing length. The tubular main body 30 may have a series of three decreasing internal diameters (which decrease in steps) with the largest diameter at a first end 34 of the inner valve supporting section 29 - for example, the diameters may be about 25.6mm, 19.8mm and 16.8mm. An external surface 35 of the tubular main body 30 may have a large diameter at the first end 34 of the supporting section 29 - for example, about 28.8mm - and a stepped smaller diameter towards a second end 36 of the supporting section 29 - for example, about 19.6mm.

Two securing arms 38,39 may extend from opposing positions around the external surface 35 of the tubular main body 30 of the inner valve supporting section 29 and may be integrally connected to the internal surface of the manifold attachment arrangement 11, for example away from the first end 10 of the main body section 8 of the housing 7. The arms 38,39 may be generally perpendicular to the longitudinal axis of the main body 8 of the housing 7 such that a longitudinal axis of the inner valve supporting section 29 and the longitudinal axis of the main body 8 of the housing 7 may be generally aligned with and parallel with each other. The first end 10 of the main body section 8 of the housing 7 may be adjacent the first end 34 of the valve supporting section 29.

A non-return valve 41 of the type described above may be fitted into the inner valve supporting section 29 with the cylindrical base portion of the valve closest to the first end 34 of the main body section 8 of the housing 7. The valve 41 may have a friction fitting with the inner valve supporting section 29. The inner valve supporting section 29 may or may not include a non-return valve 41 - the inner valve supporting section 29 is also referred to as an inner tube 29, therefore (which may or may not include a non-return valve 41). In some embodiments, the inner valve supporting section 29 may not support a valve and may be a substantially open tube.

The manifold attachment arrangement 11 may be of a type such that it is suitable for attachment to a water meter manifold 1 (for example, of standard construction as described above). The housing 7 may be attached to the manifold 1 in a location such that water flowing through the manifold 1 may pass through the non-return valve held in the housing 7. For example, the housing 7 may attach to the water meter manifold 1 at an attachment arrangement 5 of the manifold 1 to which a water meter 40 would normally be attached. Thus, it will be appreciated that the manifold attachment arrangement 11 of the housing 7 may substantially mirror an attachment arrangement (not shown) of a water meter 40.

Similarly, the water meter attachment arrangement 28 of the housing 7 may be of a type such that it is suitable for attachment to a water meter 40. For example, the housing 7 may attach to the water meter 40 at an attachment arrangement of the meter to which a water meter manifold 1 would normally be attached. Thus, it will be appreciated that the meter attachment arrangement 28 of the housing 7 may substantially mirror an attachment arrangement 5 of the water meter manifold 1.

Consequently, as will be understood, the housing of some embodiments may be connected to a water meter manifold 1 and a water meter 40 may be attached to the housing 7. Thus, the housing 7 (and the non-return valve 41 which it may house) may be located between the water meter 40 and the water meter manifold 1 such that water flowing through the manifold 1 may pass through the housing 7.

Specifically, water which may be drawn through the external cavity of a coaxial pipe section 4 of a water meter manifold 1, and will flow through the housing 7 between the inner surface of the wall 9 of the housing 7 and the inner valve supporting section 29. Water which has passed through the water meter 40 and, consequently, may be flowing through an internal cavity of a coaxial pipe section of the water meter 40 will flow through the valve 41 located in the inner valve supporting section 19 of the housing 7 (if provided) and into the internal cavity of the coaxial pipe 4 of the water meter manifold 1. In other words, a first flow path is defined between the inner surface of the wall 9 and the inner tube 29, and a second flow path is defined inside the inner tube 29. The first and second flow paths may therefore be concentric flow paths.

Rubber (or a synthetic equivalent) seals 6 in the form of washers (or o-rings) may be used with the housing to ensure that excessive amounts of water do not leak from around the attachment arrangements 5,28. An ethylene propylene diene monomer rubber may be used for the seals. The seals may be made to BS831. The seals may have an internal diameter of 50.8mm or 24.5mm and may have respective cross-sectional thicknesses of 3.53mm or 5.15mm.

Washers 6 may be located at the abutment surface 17 for the manifold attachment arrangement 11 of the housing 7 and at the first end 34 of the inner valve supporting section 29 (see figure 3).

When a housing 7 according to some embodiments of the present invention is attached to a water meter manifold 1, then the stop surface 15, and abutment surface 17 of the manifold attachment arrangement 11 of the housing 7 may abut corresponding surfaces of the manifold. Similarly, the meter abutment surface 25, and the inner surface of the meter abutment section 22 may abut corresponding surfaces of the water meter 40. Washers (or o-rings) may be placed between the abutting surfaces. Other surfaces of the housing 7 may abut the meter 40 or the manifold 1 - as will be appreciated.

Surfaces of the inner valve supporting section 29 may abut corresponding surfaces of the meter and manifold 1 in order to provide or seek to provide a continuous substantially sealed inner cavity running from the meter into the manifold 1. Washers (or o-rings) may be utilised to improve or achieve the required seals.

The meter 28 and manifold 11 attachment arrangements may be threaded surfaces (as discussed above) but other attachment arrangements may also be used.

The inner valve supporting section 29 of the housing 7 may be arranged such that a non-return valve supported by the housing 7 may allow water to flow from the second end 19 of the housing 7 to the first end 34 through the valve 41 but will substantially prevent water from flowing through the valve 41 in the opposite direction.

Thus, some embodiments include a pipe section 8 with an attachment arrangement 11,28 at either end (one for attachment to a water meter 40 and one for attachment to a water meter manifold 1). The pipe section 8 is coaxial with an inner valve arrangement 29 and has an outer cavity - or channel - which is substantially free from obstruction (with the exception of the arms which support the inner valve arrangement 29) and an inner cavity (of the valve arrangement 29) - or channel - which may contain a valve 41 which is designed to allow water to flow through the inner cavity in one direction but substantially not in the opposing direction.

Embodiments, therefore, achieve many of the advantages described in GB2440412.

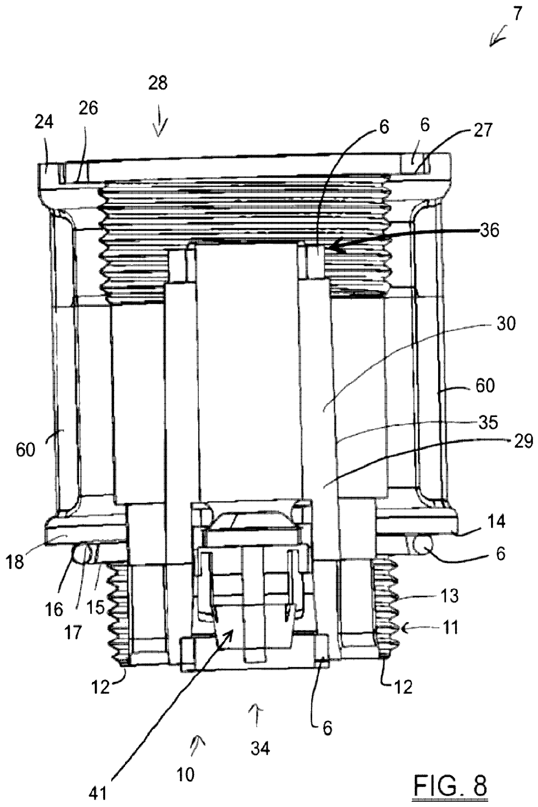

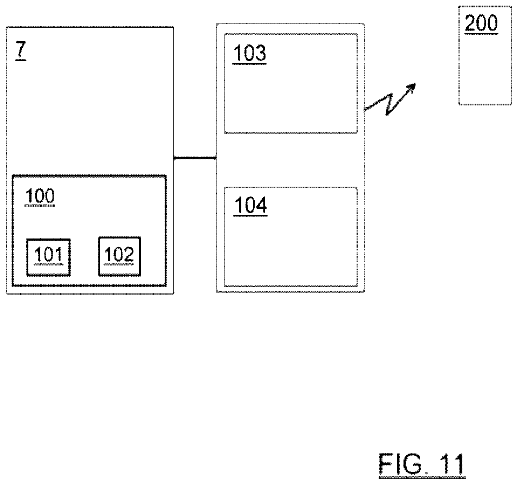

With reference to figures 8-11, some embodiments include an electrical power generator 100. The electrical power generator 100 may be configured to generate electrical power from the flow of water through the housing 7. This may be the flow of water through the inner valve supporting section 29 and/or the flow of water through the channel defined between the inner valve supporting section 29 and the main body section 8 of the housing 9.

The electrical power generator 100 may, therefore, be located upstream or downstream of the water meter 40 (in relation to the normal flow of water). Locating the electrical power generator 100 downstream of the water meter 40 may prevent or reduce the risk of the presence of the generator 100 from affecting the water meter 40 - for example, affecting (i.e. altering) a meter reading - compared with locating the electrical power generator 100 upstream of the water meter 40, in some examples.

The electrical power generator 100 may be located upstream of the non-return valve 41 in the housing 7 (if, indeed, there is one provided). In some embodiments (not depicted), the electrical power generator 100 may be located downstream of the non-return valve 41 in the housing 7 (if provided) and this may entail, for example, positioning the non-return 41 closer to the second end 19 then depicted (and the electrical power generator 100 may be configured, in such embodiments, to generate electrical power from the flow of water through the inner valve supporting section 29).

The electrical generator 100 may include a rotor member 101 and a stator member 102. The rotor member 101 may be at least partially located in the channel defined by the inner valve supporting section 29 such that the flow of water therethrough may cause rotation of at least part of the rotor member 101. The rotor member 101 may be at least partially located in the channel defined between the inner valve supporting section 29 and the main body section 8 of the housing 7, such that the flow of water therethrough may cause rotation of at least part of the rotor member 101.

The rotor member 101 may include one or more rotor elements 101a which are configured (e.g. angled with respect to the flow of water) such that rotational movement of the or each rotor element 101a is imparted by the flow of water past the or each rotor element 101a. In other words, passing water may drive rotation of the rotor member 101 by flowing past one or more rotor elements 101a. This rotational movement may be about a rotational axis of the rotor member 101, which may be aligned with a central longitudinal axis of the housing 7.

The rotor member 101 may be positioned in a water flow path (as set out above) to allow flowing water either to impinge the rotor member 101 or to pass the rotor member 101 without impinging the rotor member 101. In this way, the rotor member 101 may not create a backlog (i.e. an accumulation of water) or otherwise restricting the flow of water through the housing 7, by blocking the flow path. The electrical generator 100 may therefore be configured to generate power through rotation of the rotor member 101 by passing water, whilst the rotor member 101 also allows some water to pass by unaffected. By preventing or reducing the chance of a backlog or other restriction on the flow of water through the housing 7, a drop in pressure may also be prevented or substantially inhibited.

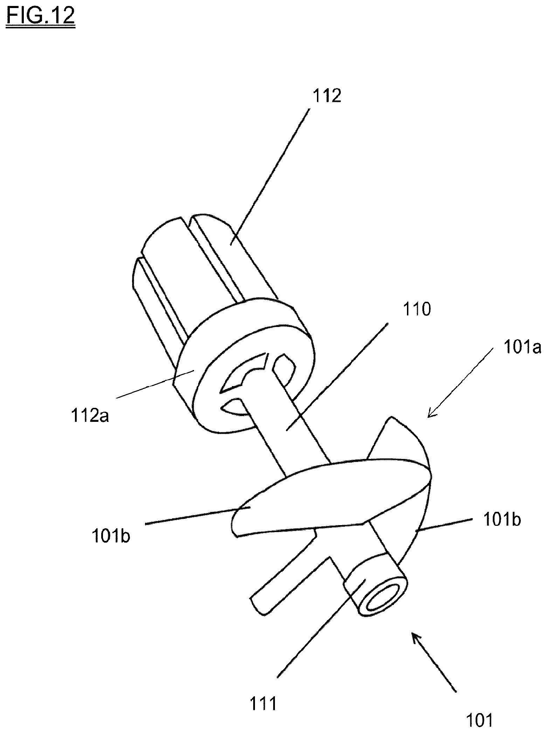

The rotor member 101 may be an impeller or may include an impeller. The rotor member 101 may include a shaft 110, and the or each rotor element 101a may be configured to rotate with the shaft 110 - see figure 12, for example.

The or each rotor element 101a may be coupled to a magnetic element 112, such that movement of the or each rotor element 101a about the rotational axis causes corresponding movement of the or each magnetic element 112. In some embodiments, the or each rotor element 101a is a respective one of the or each magnetic elements 112.

In some embodiments, the magnetic element 112 may be attached to an end of the rotor element 101a, or may be inside the rotor element 101a (i.e. the rotor element 101a may define an interior and the magnetic element 112 may be located inside the interior). For example, the rotor element 101a may define an aperture for inserting the magnetic element 112 into the rotor element 101a.

In some embodiments, the magnetic element 112 may be mounted on the shaft 110 - for example, on a circumference of the shaft 110 (such as an outer circumference of the shaft 110). The magnetic element 112 may completely or substantially surround the circumference of the shaft 110.

The magnetic element 112 may be mounted at a different position on the shaft 110 than the rotor element 101a. For example, the rotor element 101a may be located towards a proximal end of the shaft 110 and the magnetic element 112 may be located towards a distal end of the shaft 110. In other words, the shaft 110 may define a length and the rotor element 101a may have a first position on the length, and the magnetic element 112 may have a second (different) position on the length. The magnetic element 112 may be located at or around an end of the shaft 110, for example.

The shaft 110 may include a mount 112a to receive the magnetic element 112, as shown in figure 12. The mount 112a may define a recess (for example, a cupped portion) or a slot or the like, to receive the magnetic element 112 or at least part thereof. The magnetic element 112 may be received by the mount 112a in an interference fit. The magnetic element 112 may be adhered or otherwise fixed to the mount 112a.

The magnetic element 112 may include multiple magnets and the mount 112a may be configured to receive each magnet - for example, in distinct recesses or slots or the like. The recesses or slots or the like may have a predetermined separation, which may be based on the strength of each magnet of the magnetic element 112, for example. In other words, the magnetic element 112 may comprise two or more magnets and the magnets may be separated by the mount 112a. In some embodiments there may be four magnets and in some embodiments there may be six magnets, for example. The magnets forming the magnetic element 112 of some embodiments may be spaced (e.g. evenly spaced) around the circumference of the shaft 110. The magnetic element 122 may, in some embodiments, be a single unitary magnet.

The mount 112a may be curved to accommodate the shaft 110. One or more magnets of the magnetic element 112 may have a curved surface, and the mount 112a may define one or more curved recesses or curved slots accordingly. Part of the mount 112a (for example, a surface of a recess or slot) may be oriented in order to receive the or each magnet at an angle inclined with respect to the expected flow direction.

The mount 112a may be formed from multiple (for example, two) mount sections. For example, the mount 112a may be configured to receive two or more parts of the magnetic element 112 (e.g. a top part and a bottom part of a magnet). The mount sections may be spaced apart on the shaft 110, a distance depending on a size of the magnetic element 112 - for example, based on the length of the or each magnet. One or more of the mount sections may define a recess or slot as described above. One or more of the mount sections may define a clip or another retaining means, for retaining the magnetic element 112. In some embodiments, therefore, the or each magnet may be secured at two locations (or more) along their respective lengths by the mount 112a (which might be secured to either end of the or each magnet).

The or each mount section may extend a radial distance outwards from the shaft 110 - in other words, may be mounted on the shaft 110 and may have a depth extending into the inside of the inner tube 29. One mount section may extend a greater radial distance from the shaft 110 than the or each other mount sections. For example, a first mount section may be positioned upstream (with respect to the expected flow of water) from a second mount section, and may extend a greater radial distance outwards from the shaft 110 - as shown in figure 17. The opposite may be true, and the second mount section (downstream of the first mount section) may extend a greater radial distance outwards from the shaft 110 than the first mount section. One or more (or all) of the mount sections may be integrally formed with the shaft 110 or may be secured thereto (e.g. through an interference fit on respective tapering parts of the shaft 110 at appropriate locations).

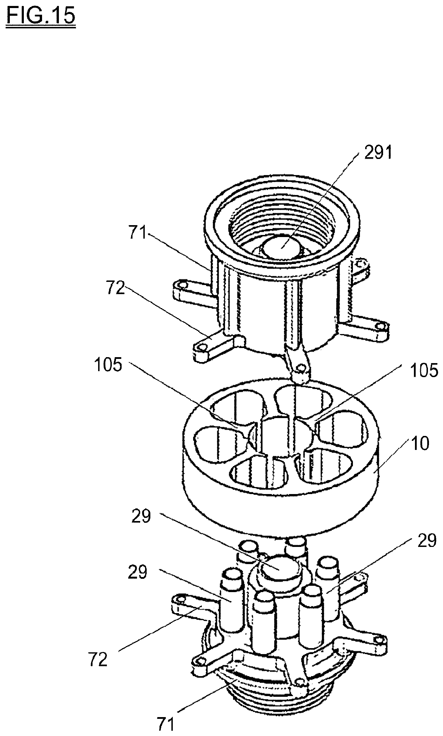

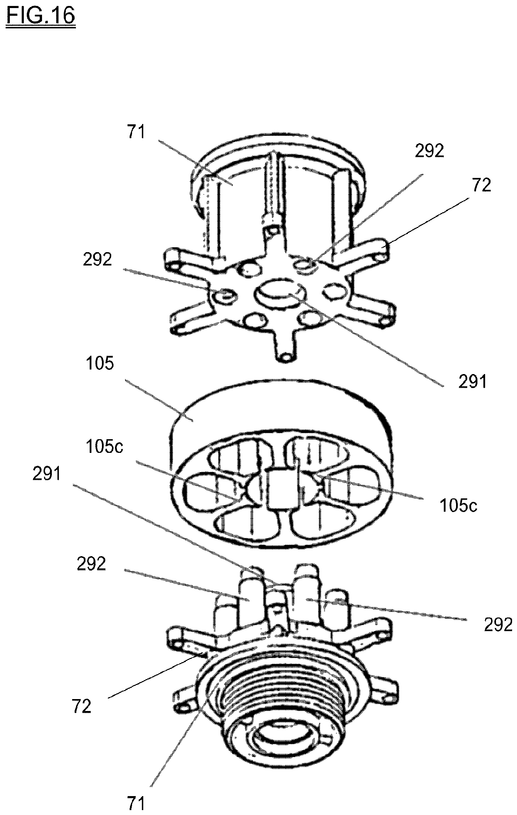

The mount 112a may be included in any embodiments of the present invention described herein, within the inner tube 29 - i.e. not limited to the embodiment shown in figures 17-19. For example, the tubes 291 as shown in figures 15 and 16, which form the inner tube 29 when connected, may include the mount 112a (which may include one or more mount sections).

The rotor member 101 may be in the form of a helical member, which may be an elongate helical member oriented to be parallel with the longitudinal axis of the housing 7.

The or each rotor element 101a may be or may include a plate 101b (or fin) inclined with respect to the expected flow of water, such that the flow of water past the plate 101b will cause rotation of the or each rotor element 101a. For example, the plate 101b may take the shape of an Archimedes screw. However, multiple separate plates 101b on the shaft 110 may be more effective than an Archimedes screw-shaped plate 101b, to prevent flowing water from being directed towards the shaft 110, in some embodiments.

The or each mount section of the mount 112a may define a surface inclined with respect to the expected flow of water, in order to aid rotation as the rotor element 101a is rotated by passing water. An angle of incline of the surface with respect to the expected flow of water may be the same or substantially the same angle as that of the plate 101b, for example, or may be steeper or shallower.

There may be a gap between adjacent plates 101b, and the extent of the gap may be selected based on the desired torque of the rotor member 101. For example, an overlap between adjacent plates 101b may increase torque by preventing water from flowing between the plates 101b without changing trajectory.

The length of the shaft 110 and the size of the or each plate 101b may be determined based on the expected (or otherwise established) water flow rate, or the nature of the water flow (i.e. whether the water flow is laminar or not).

A size of the or each plate 101b (e.g. radial extension from the shaft 110) may depend on the internal diameter of the inner tube 29. Clearance (i.e. the air gap) between the or each plate 101b and the inner tube 29 may affect the torque of the rotor member 101, as water flows around the outside of the or each plate 101b - sufficient clearance may be required to allow the rotor member 101 to rotate freely (without making physical contact with the inner tube 29). The clearance between the or each plate 101b and the inner tube 29 also depends on the size of the shaft 110 (with which the or each plate 101b may be associated); however, for the sake of ease of manufacture, it may not be desirable to alter the shaft 110 in order to adjust clearance.

The radial distance that the mount section (or the one or more mount sections) extends from the shaft 110 may be substantially equal to (or equal to) the radial distance extended by the or each plate 101b. In this way, the or each mount section may allow an air gap - i.e. clearance - between the mount section and a wall of the inner tube 29.

The rotor member 101 may be formed from a plastics material or may include a plastics material (for example, the or each rotor element 101a may be formed from a plastics material), and the rotor member 101 or part of the rotor member 101 may be created by additive manufacturing (e.g. so-called 3D printing). The rotor member 101 may be made by injection moulding or the like.

In some embodiments, the or each rotor element 101a is carried by a bearing 116. The bearing 116 may be partially or entirely formed from steel, for example. The rotor member 101 and/or the bearing 116 may include an insert 111 formed from steel (or other suitable material) to provide a contact point between the rotor element 101a and the bearing 116 having a lower friction than if the rotor member 101 and the bearing 116 were in direct contact. The rotor member 101 may define a region 111a (which may be a surface or a recess or the like) for receiving the insert 111. The region 111a may allow the insert 111 to be removable or replaceable, without the need to dismantle the bearing 116 or the rotor member 101, for example.

The bearing 116 may include a screw part having a conical end and may end in a point, configured to contact the rotor member 101 or the insert 111. The insert 111 may be erodible by the pointed end - this may damp the effects of friction which would otherwise cause wear on at least part of the rotor member 101. The bearing 116 may include a screw mount. The bearing 116 may be a jewel bearing.

The insert 111 may have a uniform thickness, and the region 111a may be a recess dimensioned to receive the insert 111 in an interference fit. The insert 111 may define a lip or may be mushroom-shaped, or the like, such that part of the insert 111 may be configured to overhang at least part of the rotor member 101 when inserted into the region 111a. The overhanging part of the insert 111 may provide additional benefits such as protecting the rotor member 101 from damage by water and/or the bearing 116 (for example, the pointed end of the screw part of the bearing 116). The shaft 110 may have a diameter (i.e., a cross-sectional width) and the overhanging part of the insert 111 may have the same or substantially the same diameter as the shaft 110, for example - as shown in figure 12.

Two bearings 116 may be provided, one associated with each of two ends of the shaft 110 of the rotor member 101, for example - as shown in figure 17. This configuration of bearings 116 may be included in any of the embodiments described herein - i.e. not limited to the embodiment of figure 17.

The screw mount (i.e. support for the screw part of the or each bearing 116) may be fixed to the inside of the inner tube 29. For example, the screw mount may enclose part of the bearing 116 or substantially surround part of the bearing 116.

One or more guide vanes 115 may be provided to guide the flowing water. The one or more guide vanes 115 may be provided in the inner tube 29 - for example, extending radially inwardly in the inner tube 29. The screw mount of the bearing 116 may define the one or more vanes 115. In some embodiments, another part of the bearing 116 (or a housing of the bearing 116) may define the one or more vanes 115.

The one or more guide vanes 115 may be located upstream of the rotor member 101. The one or more guide vanes 115 may be inclined with respect to the expected flow of water in order to cause the water to change its flow direction, for example causing the water to swirl. The one or more guide vanes 115 may be inclined based on the orientation of the or each plate 101b, to change the water flow in a manner to aid rotation of the rotor member 101.

Where two bearings 116 may be provided, and where one of the bearings 116 may be located downstream of the rotor member 101, the downstream bearing 116 may not include guide vanes 115 or may include one or more guide vanes 115 having a different orientation than the one or more guide vanes 115 located upstream, instead configured to reduce swirling of the water flow.

One or more guide vanes 115 may be provided on one or more mount sections of the mount 112a.

The or each magnetic element 112 may be mounted in relation to the bearing such that movement of the or each rotor element 101a causes movement (e.g. through abutment therewith) of the or each magnetic element 112. For example, the bearing may include a first annular c-shaped channel, an open mouth of which may face an open mouth of a second annular c-shaped channel. The or each rotor element 101a may be mounted with portions extending into each annular c-shaped channel such that the or each rotor element 101a can move around a path defined by the two annular c-shaped channels. Movement of the or each rotor element 101a may drive movement of the or each magnetic element 112 which may be captured by the first and/or second c-shaped channel. The first c-shaped channel may be located, for example, adjacent the main body section 8 of the housing 7 and the second c-shaped channel may be located adjacent the inner valve supporting section 29 such that the or each rotor element 101a may extend across at least a part of the channel defined therebetween. The bearing may be supported, for example, on a ridge defined in a wall of the housing 7 and/or may be at least partially embedded into one or more walls thereof.

In some embodiments, the bearing has a single c-shaped channel with an inwardly facing mouth and the or each rotor element 101a may extend across the single c-shaped channel (e.g. across a diameter thereof, or in a Y-shape across the bearing) - such an arrangement may be suitable for use, for example, when the rotor member 101 is located within the channel of the inner valve supporting section 29. The bearing may be supported, for example, on a ridge defined in a wall of the housing 7 (e.g. a wall of the inner valve supporting section 29 and/or may be at least partially embedded into one or more walls thereof.

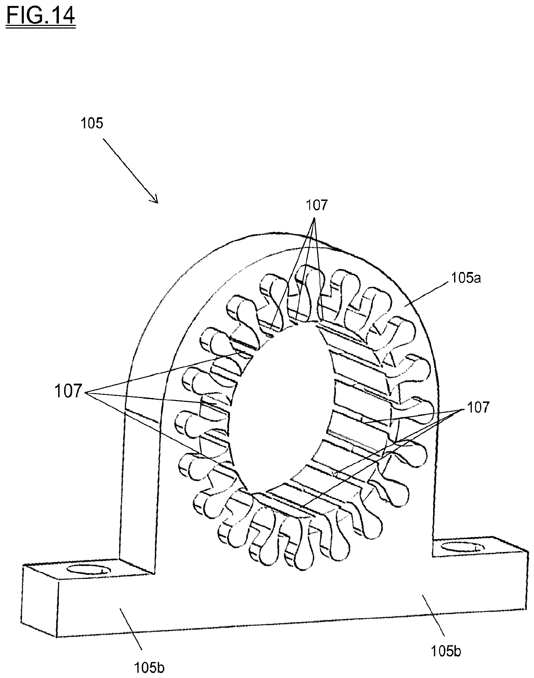

In some embodiments, the rotor element 101a may take the form of an annular ring 101a. The annular ring 101a may include one or more inclined plates 101b, as described above. The plate 101b or plates 101b may be inclined with respect to a plane defined by a cross-section of the annular ring 101a. In other words, the annular ring 101a may define a circular or substantially circular cross-section lying in a plane, and the plate 101b or plates 101b may be inclined with respect to that defined plane - see figure 14. In use, the cross-section plane may be substantially perpendicular to the direction of flow of water past the annular ring 101a, and the plates 101b may be inclined in order to be driven by passing water.

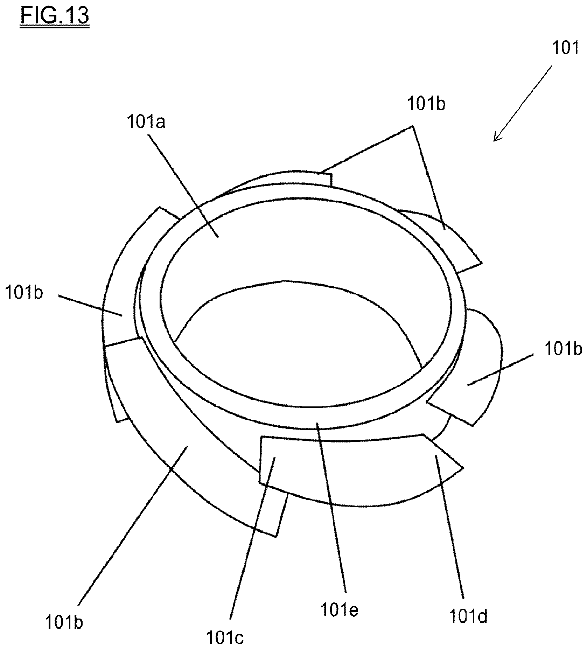

For example, there may be plates 101b arranged on the circumference of the annular ring 101a, each plate 101b inclined such that each plate 101b has an upper end 101c and a lower end 101d with respect to a top side 101e of the annular ring 101a. The plates 101b may therefore be arranged such that the upper side 101c of a plate 101b immediately follows the lower side 101d of a previous plate 101b, around the annular ring 101a, as shown in figure 13.

In other words, each plate 101b may be inclined in a substantially similar manner to the plates 101b either side of it around the annular ring 101a, such that there is a repeated pattern of inclined plates 101b. This may allow the annular ring 101a to be rotated by the flow of water past the annular ring 101a.

The plates 101b may be equally spaced. The plates 101b may be present around the entire circumference of the annular ring 101a, or only part of the circumference of the annular ring 101a may include plates 101b. The circumference of the annular ring 101a may include a single plate 101b, which may surround the annular ring 101a.

The or each plate 101b may include the magnetic element 112 - for example, the magnetic element 112 may be mounted on a plate 101b, or may be located inside a plate 101b, or the plate 101b or part of the plate 101b itself may be the magnetic element 112.

The annular ring 101a and plates 101b may be integrally formed, for example, made by additive manufacturing (i.e. 3D printing).

The stator member 102 may be, for example, in the form of a coil of an electrical conductor (such as wire) which may be located in the housing 7 adjacent the rotor member 101 - such that rotation of the rotor member 101 (and the magnetic element 112(s)) induces an electrical current in the stator member 102.

The stator member 102 may include one or more stator elements which are distributed around the housing 7 - each stator element may include a coil and the coils of the stator elements may be connected in electrical communication with each other (in series or in parallel).

In some embodiments, the stator member 102 may be externally mounted - e.g. mounted outside of the outer wall 9. The or each stator element may be located between and/or around the or each rib 60.

The stator member 102 may be located radially outwardly from the rotor member 101 and/or may be located radially inwardly in some embodiments.

Electrical conductors may connect the stator member 102 to one or more externally accessible terminals (which may be connection blocks or fly-wires, for example). In the case of a stator member 102 which is at least partially located in the inner valve supporting section 29, these electrical conductors may pass through or on the securing arms 38,39 (there may only be one securing arm 38,39, in some embodiments).

The stator member 102 may be at least partially embedded in the material of the housing 7. For example, one or more coils thereof may be covered from contact with the fluid (e.g. water) passing through the housing 7 by an electrically insulating material which may be the material which forms the housing 7 (or a part thereof), for example.

The stator member 102 may be an annular ring which extends around substantially an entire circumference of the housing 7 or a part thereof.

The stator member 102 may include a winding core 105. The winding core 105 may be an annular ring, or may include an annular ring. As shown in figure 14, the winding core 105 may define an annular ring portion 105a, and may define one or more fixing portions 105b. The fixing portion 105b may allow fixture of the winding core 105 in the housing 7. For example, the fixing portion 105b may define an aperture to receive a fixing means, such as a screw. The winding core 105 may be fixable in the housing 7 through fixture to an external part of the housing 7 - i.e. a part separated from the flow of water, in use - to prevent blocking water flow.

The winding core 105 may be laminated. One or more layers may be around 0.5mm thick. The winding core 105 may be formed from an iron alloy - for example steel (e.g. electrical steel). One or more layers may be electrically insulated from each other - for example, coated in an electrically insulating material. The thickness of the winding core 105 (i.e. the number of layers) may be selected based on the desired voltage output.

The winding core 105 may define a slot 107, configured to receive the electrical conductor - e.g. wire. The winding core 105 may define multiple slots 107, spaced apart around the winding core 105, and wire may be wrapped around the winding core 105 to create one or more magnetic poles when an electrical current is passed through the winding core 105. Wire may not be wrapped around the winding core 105 directly, but may be wrapped around a bobbin to be connected to the winding core 105, for example at the location of the slot 107.

The number of poles, the number of slots 107 per pole and the number of turns of wire per slot 107 may be selected based on the predicted (or otherwise established) speed of the rotor member 101 due to flow of water.

By way of example, the stator member 102 may include four poles, in the form of two pole-pairs (i.e. a pair including a north and a south pole). There may be five slots per pole. The stator member 102 may include sixty turns (i.e. of wire) per pole. This particular example may produce 5V, with a matched load.

In another example, the number of turns may be lower - twenty turns, for example, may lower the matched output voltage, but would save both time and costs.

In another example, the winding core 105 may be made of thirty laminations, and the stator member 102 may include fifty five turns per pole. There may be three hundred and thirty turns in total, for example, where there are six poles (or three pole pairs).

The winding core 105 of the stator member 102 may cause some resistance to rotation of the rotor member 101 where the or each rotor element 101a is or includes a magnet (as the magnet may be attracted to the winding core 105). This is known as cogging. The number of layers of the winding core 105 may be selected to inhibit cogging.

The magnetic element 112 and the stator member 102 may be arranged such that there is an air gap therebetween - for example, to address cogging. The extent of the air gap may depend on clearance, for the magnetic element 112 to move in the housing 7 with the rotor element 101a, for example. The extent of the air gap may determine the magnetic field strength of the magnetic element 112, for example. A larger air gap reduces the field strength at the stator member 102 to inhibit cogging.

The stator member 102 may be partially externally mounted with respect to the outer wall 9, and may be partially inside of the outer wall 9. For example, the stator member 102 may include one or more stator extensions 105c configured to extend into the housing 7 from outside of the outer wall 9. The winding core 105 may define the one or more stator extensions 105c (i.e. legs). The or each stator extension 105c may extend radially inwardly from an outer part winding core 105 of the stator member 102. The outer part of the winding core may be generally annular in form. A distal end of each stator extension 105c may carry a shaped end piece with an end surface which is curved so as to provide a close fit relationship with respect to the magnetic element 112. The wire of the stator member 102 may be wrapped around the or each stator extension 105c and/or around the outer part of the winding core 105.

The or each stator extension 105c may be long enough to extend from outside of the outer wall 9 into the first flow path. The or each stator extension 105c may be long enough to extend from outside of the outer wall 9 into the inner valve supporting section 29 (or inner tube 29) - i.e. the second flow path.

Multiple stator extensions 105c may be provided to minimise cogging, as this would prevent the magnetic element 112 from being more attracted to one particular stator extension 105.

The or each stator extension 105c may be skewed (i.e. not radial) with respect to the central axis of the housing 7 - i.e. at an angle with respect to the expected flow of water - to inhibit cogging. The or each stator extension 105c may not be skewed in this way, however, for ease of manufacture of the stator member 102 and housing 7, as described below.

The outer wall 9 and the or each stator extension 105c may be sealed, to prevent (or reduce the risk of) leakage due to the or each stator extension 105c. For example, the housing 7 may be formed from two (or more) portions 71, and the portions 71 may be configured to fit together.

In some embodiments, the portions 71 are configured to fit together in a manner sealing (or substantially sealing) the or each stator extension 105c (and/or any wire winding thereon) from direct contact with the water flowing through the housing 7. An example of such an embodiment can be seen in figures 15 and 16, which are described in more detail below.

In some embodiments, the portions 71 are of a different form and one such example can be seen in figures 17, 18 and 19.

In either case, silicone sealing may provide sealing or further sealing between the outer wall 9 and the or each stator extension 105c.

With reference to the example of figures 15 and 16 (and some other embodiments), each portion 71 may include a first tube 291, defining a section of the inner valve supporting section (or tube) 29. Each portion 71 may include one or more second tubes 292, each defining a section of the first flow path (i.e. the flow path defined in the housing 7 inside the outer wall 9, and outside of the inner valve supporting section 29). The first 291 and second 292 tubes may be internal to a respective body of the one or more portions 71, or may project out of the respective body of the one or more portions 71.

The portions 71 of the housing 7 may fit together to form the inner valve supporting section (or tube) 29 and the first flow path, with the first 291 and second 292 tubes passing between the or each stator extension 105c of the stator member 102, as shown in figure 15.

The portions 71 may fit together via the first 291 and/or second 292 tubes. For example, the first tube 291 of a first portion 71 may project from the body of the first portion 71, whereas the first tube 291 of a second portion 71 may be internal to the body of the second portion 71 and may define an aperture for receiving the projecting first tube 291 of the first portion 71 (in a male and female fit). Likewise, one or more second tubes 292 may create male and female fits between two portions 71.

The one or more first tubes 291 may be configured to receive one or more O-rings or other members for improving a seal (e.g. against water). The one or more second tubes 292 may be configured to receive one or more O-rings or other members for improving a seal (e.g. against water). Other mating parts of the housing 7 may be configured to receive an O-ring or other sealing member.

When assembling the housing 7 from the two or more portions 71, the stator member 102 may be placed between the portions 71 such that the first 291 and second 292 tubes fit together with the stator member 102 arranged therebetween. Figures 15 and 16 show an exploded view of two portions 71 and the winding core 105 of the stator member 102.

To assemble the housing 7 securely, the portions 71 may be fixable to one another. For example, the portions 71 may be fixable using an adhesive, or one portion 71 may include a threaded member configured to connect to a threaded member of another portion 71. The portions 71 may be configured to receive a fixing member - for example a screw, or a nut and bolt, or the like - such that the portions 71 are held together by the fixing member. As shown in figures 15 and 16, at least one portion 71 (in the figures, two portions 71) may include one or more radial extensions 72 configured to receive a fixing member (for example, defining a fixing member receiving aperture). In some embodiments, a first portion 71 and a second portion 71 may each include one or more radial extensions 72, configured to align when the first and second portions 71 are assembled to form the housing 7, such that the one or more radial extensions 72 may be fixed together.

The stator extensions 105c may define an opening for the first tube 291 of one of the portions 71 to fit into, or even pass through. The stator extensions 105c may have a curved edge, to define a curved opening to receive a cylindrical tube 291.

There may be a space between each stator extension 105c for a second tube 292 to fit into, or even pass through (depending on the respective sizes of the winding core 105 and the tubes 292). There may be sufficient space to accommodate winding wrapped around the stator extension 105c.

In this way, the or each stator extension 105c can be positioned adjacent the inner valve supporting section (or tube) 29, without being located in the path of flowing water in the inner valve supporting section (or tube) 29 and the first flow path to seal, substantially, the flow path for the water and thus reduce the risk of leakage.

As mentioned above, figures 17, 18 and 19 are an example of a different configuration of the portions 71. In this example (and some other embodiments), there are no tubes 291,292. In this and some other embodiments, however, the housing 7 is still provided in two portions 71 which fit together. For example, one portion 71 (a first portion) may include the inner valve supporting section 29 and manifold attachment arrangement 11.

The first portion 71 may also include a disc-like part comparable in position and form to the guard section 18. This disc-like part may extend radially outwardly from the manifold attachment arrangement 11 and may include an axially extending outer wall (which may extend away from the manifold attachment arrangement 11). This outer wall may be shaped to engage (e.g. receive on or within) the outer wall 9 (which may form part of a second of the portions 71 and which may also include the meter attachment arrangement 28).

The outer wall of the first portion 71 may define one or more features which are configured to mate with one or more features of the outer wall 9 of the second portion 71. The outer wall of the first portion 71 may define one or more apertures which are configured to align with one or more apertures defined by the outer wall 9 of the second portion 71 to provide matching aperture pairs, such that respective fixing members (e.g. a screw, nut and bolt, rivet, or the like) may be used to secure the first and second portions 71 together through the or each aperture pair.

The outer wall of the first portion 71 and/or the second portion 71 may define one or more gaps such that a part or parts of the stator member 102 (such as a stator extension 105c) may fit therethrough.

Such a configuration may also be implemented, not only in relation to the embodiment exemplified by figures 17, 18 and 19 but also in relation to embodiments such as those of figures 15 and 16. In the embodiment of figures 17, 18 and 19 (and some other embodiments), however, the stator member 102 (or parts thereof) may be provided within the water flow path in the outer channel. This part of the stator member 102 (which may be part of a stator extension 105c) may be encapsulated in a plastics material, for example, or otherwise treated (e.g. painted or coated) to reduce the risk of or otherwise delay corrosion.

As will be appreciated from the above description of various embodiments, the stator member 102 may include wire wound around the or each stator extension 105c. The wire may therefore be prevented from contacting the flowing water through encapsulation or through the use of tubes 291,292, for example. In some embodiments, the or each wire winding is around the outer part of the winding core 105 and so out of the flow path of the water in any event.

In some embodiments, the wire is wound around a stator extension 105c connected to wire wound around a slot 107 (i.e. around the outer part of the winding core 105), for example.

The or each stator extension 105c may be substantially T-shaped, such that wire wrapped around the stator extension 105c is prevented or substantially inhibited from falling off the T-bar end of the stator extension 105c.

A waterproof (or substantially waterproof) shell may be provided over the stator member 102 where the stator member 102 is partially or fully externally mounted, to protect the stator member 102 from liquid damage. In other words, the housing 7 and the stator member 102 may both sit within a waterproof (or substantially waterproof) outer shell.

The housings 7 according to some embodiments may be attached to each other in series to provide a higher level of non-return protection (if they include non-return valves 41) or to add additional functionality or electrical power generation. Indeed, each housing 7 in a series of housings may contain a different type of valve 41 and/or a different electrical power generator.

Furthermore, some embodiments allow different types of non-return valve 41 to be fitted to a water meter manifold 1. In such instances the inner valve supporting section 29 may be designed to house the particular type of valve in the same manner as discussed above. Alternatively, a number of valves may be designed to fit the same inner valve supporting section of some embodiments (or, similarly, the inner valve supporting section 29 may be designed to house a number of different valves). Thus, a single housing 7 need only be supplied for a variety of different applications.

Although embodiments have been described with reference to a water meter manifold 1, it will be appreciated that embodiments may be used in other applications where non-return valve protection is required and/or electrical power generation is needed. It is simply necessary to ensure that the attachment arrangements 11,28 of the housing 7 are suited to corresponding attachment arrangements normally used in that particular application.

The one or more ribs 60 of the housing 7 seek to allow the housing 7 to be gripped without axial slippage. The guard sections 18,21 are designed to help to prevent objects (such as someone's fingers) from being caught in the attachment arrangements 11,28 of the housing 7.

In some embodiments, the meter attachment arrangement 28 and the manifold attachment arrangement 11 may include abutment surfaces on the inner valve supporting member 29 which may abut corresponding surfaces in the meter and manifold 1. Thus, two separated coaxial channels are formed between the manifold 1 and the meter.

It will be appreciated that some embodiments allow a traditional water meter manifold 1 (containing a single non-return valve 41) to be upgraded to include a further non-return valve 41 generally in series with the non-return valve in the manifold 1 and/or to include an electrical power generator. Thus, a double check valve assembly may be formed at the water meter manifold 1.

The plastics material which may be used to construct at least part of embodiments of the present invention may be a material which is approved by the UK and European water industries. The plastics material which may be used may be an acetal based plastic.

The attachment arrangements 28,11 of some embodiments may be of a type which is compliant with UK and European water industry standards.

The non-return valve which may be housed in some embodiments may be a type IO 020 valve and may be a IO 020 DN 20 valve. The valve may be a snap-in check valve. The valve may be a CO 020 DN 15 valve or other valve configured to cap or limit the flow rate through the valve (e.g. to about 25l/min).

Some embodiments may be suitable for fitting to concentric water meters and their manifolds. Examples of such devices can be found in the Water Regulations Advisory Service, Water Fittings Directory, in sections 1505, 1510, 1520 & 1525.

The externally accessible terminals of some embodiments may be coupled in electrical communication with a meter, which may be a smart meter. This coupling may be via a power storage unit 103 (e.g. in the form of a battery of capacitor) which is configured to store electrical power for use by the meter. Embodiments may, therefore, be used to generate electrical power for use by one or more parts of the meter. The meter may be the meter which is coupled to the housing 7 or may be a separate meter. In some embodiments, the externally accessible terminals are coupled in electrical communication (via the power storage unit 103 or otherwise) to a communication unit 104 which is configured to communicate information from the meter to a remote location 200 via a wired or wireless communication network (the communication unit may, therefore, be communicatively coupled to the meter).

Accordingly, embodiments may be used to scavenge electrical power by using the flow of water through the housing to generate sufficient electrical power to perform one or more functions in relation to the meter, smart meter, or communication unit.

Embodiments may be retro fitted to existing manifolds and meters (any need not include a non-return valve in some embodiments). In some embodiments, the rotation of the rotor member 101 may also be used to provide an indication of the volume of water used - which may be an indication in addition to or instead of a similar indication provided by a meter for billing purposes, for example.

Some embodiments may include a system which includes the housing 7 (with the electrical power generator) along with the communications unit 104 and/or the power storage unit 103 and/or a device at the remote location 200.

Embodiments are shown and described generally in a vertical orientation but may be fitted in other orientations (including a horizontal orientation), for example. References to orientations should, therefore, be viewed as a descriptive convenience and should not be considered to be limiting on the actual orientation of any particular embodiment.

Likewise, although embodiments are described with reference to the fitting of embodiments to water meter manifolds and water meters, embodiments may be fitted to other water fittings have the same or a similar concentric flow path arrangement.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A water fitting housing (7) comprising:
a main body section (8) having first (10) and second ends (19) and a first channel connecting the first (10) and second ends, wherein the main body section (8) includes a wall (9) and an inner tube (29), wherein the main body section (8) defines a first flow path between an inner surface of the wall (9) and the inner tube (29), and a second flow path inside the inner tube (29);
a first attachment arrangement (11) located towards the first end (10) of the main body section (8); and
a second attachment arrangement (28) located towards the second end (19) of the main body section (8),
wherein the first attachment arrangement (11) is suitable for connection to a water meter manifold and the second attachment arrangement (28) is suitable for connection to a water meter, such that water drawn through an external cavity of a coaxial pipe section of the water meter manifold will flow through the first flow path of the housing (7), and water which has passed through the water meter and through an internal cavity of a coaxial pipe section of the water meter will flow through the second flow path of the housing (7) and into an internal cavity of the coaxial pipe section of the water meter manifold, and wherein the first attachment arrangement (11) is suitable to be attached to an attachment member which is substantially identical to the second attachment arrangement (28) **characterised by:**
a rotor member (101) located at least partially within the main body section (8) of the housing (7) and including at least one magnetic element (112) configured to be driven by a flow of fluid through the housing (7); and
a stator member (102) located with respect to the rotor member (101) such that rotation of the or each magnetic element (112) induces an electrical current in the stator member (102) to generate electrical power.

2. A housing (7) according to claim 1, wherein the housing (7) is suitable for use in a water supply network.

3. A housing (7) according to any preceding claim, further including an inner valve supporting section (29) configured to receive a non-return valve (41).

4. A housing (7) according to claim 3, further including the non-return valve (41).

5. A housing (7) according to any preceding claim, wherein the housing (7) is constructed out of plastic.

6. A housing (7) according to any preceding claim, wherein the attachment arrangements (11,28) comprise threaded surfaces.

7. A housing (7) according to any preceding claim, wherein the rotor member (101) includes an annular ring (101a), the annular ring (101a) including a plate (101b) inclined with respect to a cross-sectional plane of the annular ring (101a).

8. A housing (7) according to claim 7, wherein the plate (101b) includes the at least one magnetic element (112).

9. A housing (7) according to any preceding claim, wherein the stator member (102) includes a stator extension (105c), configured to extend into the first flow path between the wall (9) and the inner tube (29) of the main body section (8).

10. A meter and a housing (7) according to any preceding claim, wherein the generated electrical power provides electrical power for one or more operations of the meter.

## Patentansprüche

1. Wasserarmaturengehäuse (7), das Folgendes umfasst:
einen Hauptkörperteil (8) mit einem ersten (10) und einem zweiten Ende (19) und einem das erste (10) und das zweite Ende verbindenden ersten Kanal, wobei der Hauptkörperteil (8) eine Wand (9) und ein Innenrohr (29) aufweist, wobei der Hauptkörperteil (8) einen ersten Strömungsweg zwischen einer Innenfläche der Wand (9) und dem Innenrohr (29) und einen zweiten Strömungsweg innerhalb des Innenrohrs (29) definiert;
eine erste Befestigungsanordnung (11), die sich nahe dem ersten Ende (10) des Hauptkörperteils (8) befindet; und
eine zweite Befestigungsanordnung (28), die sich nahe dem zweiten Ende (19) des Hauptkörperteils (8) befindet,
wobei die erste Befestigungsanordnung (11) zum Verbinden mit einem Wasserzählerverteiler und die zweite Befestigungsanordnung (28) zum Verbinden mit einem Wasserzähler geeignet ist, so dass durch einen äußeren Hohlraum eines koaxialen Rohrabschnitts des Wasserzählerverteilers (8) gezogenes Wasser durch den ersten Strömungsweg des Gehäuses (7) strömt und durch den Wasserzähler und durch einen inneren Hohlraum eines koaxialen Rohrabschnitts des Wasserzählers geströmtes Wasser durch den zweiten Strömungsweg des Gehäuses (7) und in einen inneren Hohlraum des koaxialen Rohrabschnitts des Wasserzählerverteilers strömt, und wobei die erste Befestigungsanordnung (11) an einem Befestigungselement, das im Wesentlichen mit der zweiten Befestigungsanordnung (28) identisch ist, befestigt werden kann, **gekennzeichnet durch**:
ein Rotorelement (101), das sich zumindest teilweise innerhalb des Hauptkörperteils (8) des Gehäuses (7) befindet und mindestens ein magnetisches Element (112) enthält, das zum Antreiben durch einen Fluidstrom durch das Gehäuse (7) konfiguriert ist; und
ein Statorelement (102), das in Bezug auf das Rotorelement (101) so positioniert ist, dass eine Drehung des oder jedes magnetischen Elements (112) einen elektrischen Strom im Statorelement (102) induziert, um elektrische Leistung zu erzeugen.

2. Gehäuse (7) nach Anspruch 1, wobei das Gehäuse (7) zur Verwendung in einem Wasserversorgungsnetz geeignet ist.

3. Gehäuse (7) nach einem vorherigen Anspruch, das ferner einen inneren Ventilstützabschnitt (29) aufweist, der zur Aufnahme eines Rückschlagventils (41) konfiguriert ist.

4. Gehäuse (7) nach Anspruch 3, das ferner das Rückschlagventil (41) enthält.

5. Gehäuse (7) nach einem vorherigen Anspruch, wobei das Gehäuse (7) aus Kunststoff konstruiert ist.

6. Gehäuse (7) nach einem vorherigen Anspruch, wobei die Befestigungsanordnungen (11, 28) Gewindeflächen aufweisen.

7. Gehäuse (7) nach einem vorherigen Anspruch, wobei das Rotorelement (101) einen kreisförmigen Ring (101a) aufweist, wobei der kreisförmige Ring (101a) eine Platte (101b) aufweist, die in Bezug auf eine Querschnittsebene des kreisförmigen Rings (101a) geneigt ist.

8. Gehäuse (7) nach Anspruch 7, wobei die Platte (101b) das mindestens eine magnetische Element (112) enthält.

9. Gehäuse (7) nach einem vorherigen Anspruch, wobei das Statorelement (102) eine Statorverlängerung (105c) aufweist, die so gestaltet ist, dass sie sich in den ersten Strömungsweg zwischen der Wand (9) und dem Innenrohr (29) des Hauptkörperteils (8) erstreckt.

10. Zähler und Gehäuse (7) nach einem vorherigen Anspruch, wobei die erzeugte elektrische Leistung elektrische Leistung für eine oder mehrere Operationen des Zählers bereitstellt.

## Revendications

1. Un boîtier de raccord d'eau (7) comprenant :
une section de corps principal (8) ayant des première (10) et deuxième extrémités (19) et un premier canal reliant les première (10) et deuxième extrémités, dans lequel la section de corps principal (8) inclut une paroi (9) et un tube intérieur (29), dans lequel la section de corps principal (8) définit un premier trajet d'écoulement entre une surface intérieure de la paroi (9) et le tube intérieur (29), et un deuxième trajet d'écoulement à l'intérieur du tube intérieur (29) ;
un premier agencement de fixation (11) situé vers la première extrémité (10) de la section de corps principal (8) ; et
un deuxième agencement de fixation (28) situé vers la deuxième extrémité (19) de la section de corps principal (8),
dans lequel le premier agencement de fixation (11) est adapté pour se raccorder à un collecteur de compteur d'eau et le deuxième agencement de fixation (28) est adapté pour se raccorder à un compteur d'eau, de sorte que l'eau aspirée par une cavité externe d'une section de tuyau coaxial du collecteur de compteur d'eau s'écoulera par le premier trajet d'écoulement du boîtier (7), et l'eau qui est passée à travers le compteur d'eau et à travers une cavité interne d'une section de tuyau coaxial du compteur d'eau s'écoulera par le deuxième trajet d'écoulement du boîtier (7) et dans une cavité interne de la section de tuyau coaxial du collecteur de compteur d'eau, et dans lequel le premier agencement de fixation (11) est adapté pour être fixé à un élément de fixation qui est sensiblement identique au deuxième agencement de fixation (28) **caractérisé par** :
un élément de rotor (101) situé au moins partiellement à l'intérieur de la section de corps principal (8) du boîtier (7) et incluant un ou plusieurs éléments magnétiques (112) configurés pour être entraînés par un écoulement de fluide à travers le boîtier (7) ; et
un élément de stator (102) situé par rapport à l'élément de rotor (101) de sorte que la rotation du ou des éléments magnétiques (112) induit un courant électrique dans l'élément de stator (102) pour générer de l'énergie électrique.

2. Un boîtier (7) selon la revendication 1, dans lequel le boîtier (7) est adapté pour être utilisé dans un réseau d'alimentation en eau.

3. Un boîtier (7) selon l'une quelconque des revendications précédentes, incluant en outre une section de support de vanne intérieure (29) configurée pour recevoir un clapet anti-retour (41).

4. Un boîtier (7) selon la revendication 3, incluant en outre le clapet anti-retour (41).

5. Un boîtier (7) selon l'une quelconque des revendications précédentes, dans lequel le boîtier (7) est fabriqué en plastique.

6. Un boîtier (7) selon l'une quelconque des revendications précédentes, dans lequel les agencements de fixation (11, 28) comprennent des surfaces filetées.

7. Un boîtier (7) selon l'une quelconque des revendications précédentes, dans lequel l'élément de rotor (101) inclut une bague annulaire (101a), la bague annulaire (101a) incluant une plaque (101b) inclinée par rapport à un plan transversal de la bague annulaire (101 a).

8. Un boîtier (7) selon la revendication 7, dans lequel la plaque (101b) inclut le ou les éléments magnétiques (112).

9. Un boîtier (7) selon l'une quelconque des revendications précédentes, dans lequel l'élément de stator (102) inclut une extension de stator (105c), configurée pour s'étendre dans le premier trajet d'écoulement entre la paroi (9) et le tube intérieur (29) de la section de corps principal (8).

10. Un compteur et un boîtier (7) selon l'une quelconque des revendications précédentes, dans lequel le courant électrique généré fournit le courant électrique à une ou plusieurs opérations du compteur.
